# EUROPEAN PATENT SPECIFICATION

(11) **EP 3 926 181 B1**
(45) Date of publication and mention of the grant of the patent: **27.03.2024**
(21) Application number: 20180750.0
(22) Date of filing: 18.06.2020
(51) Int. Cl.: F16B 5/06

(54) **RETAINING DEVICE**
HALTEVORRICHTUNG
DISPOSITIF DE RETENUE

(43) Date of publication of application: 22.12.2021
(73) Proprietor: Illinois Tool Works, Inc., Glenview, Illinois 60025 (US); FCA Italy S.p.A., 10135 Turin (IT)
(72) Inventor: CARRATU, Christian, 10135 Turin (IT); MESSINA, Massimo, 10135 Turin (IT); SPADAROTTO, Maurizio, 10135 Turin (IT); BUILLAS, Lara, Illinois, 60025 (US)
(74) Representative: HGF

(56) References cited:
- US-A1- 2014 050 548
- US-A1- 2019 285 106

## Description

The present invention relates to a retaining device suitable for mounting a structure to a panel body of a vehicle. In particular, the present invention relates to a retaining device for mounting a structure having an integrated housing (also known as "doghouse") for the retaining device to a lining panel (i.e. vehicle panel body).

### Background

It is generally known in the motor vehicle sector that it is required to fasten functional components to the bodies of vehicles using fastening clips such as those disclosed in US2014/0050548A1 and US2019/0285106A1. Particularly, it is known that structures with an integrated housing for the retaining device (i.e. "doghouses") are fastened to panel bodies of vehicles, which house many functional components, such as, for example, internal aesthetic trims and door panels. Typically, such structures are fastened onto a vehicle body using fastening clips, plastic rivets, panel retainers or similar fasteners. These structures must be able to be easily installed and removed, in order to facilitate maintenance operations.

Also, retaining devices have been used to improve the ease and efficiency of installation and removal. Typically, retaining devices include a pin having a head and shank that projects axially away from the head towards a bushing. The bushing may be coupled with a snap-fit mechanism configured to couple the pin with a panel of a vehicle body. Typically, the snap-fit mechanism may use at least a pair of opposing teeth which project radially outward of the bushing. The pin may further be provided with flange and shoulder elements that project radially outward from the bushing, and which are adapted to cooperate with the vehicle body, so as to maintain the bushing in position during the insertion and locking of the pin.

During installation, the pin(s) may be inserted into the surface of the panel body of the vehicle. If a pin is inserted at an offset angle (that is, inserted at an angle that is not perpendicular to the plane of the panel surface), one side of the pin head will contact the panel first, creating a gap between the head of the retaining device and the vehicle body, therefore, leading to a potentially weaker structural fixing to the vehicle body. Further, in some circumstances, continued use in this way could result in structural or functional failure of the retaining device. In addition, the gap that is created between the head of the retaining device and the panel body may provide an ingress for undesired materials or dirt to accumulate.

Moreover, for existing retaining devices to facilitate the fixture of the structure (i.e. "doghouse") and the panel body, as both, the structure ("doghouse") and the panel body, are required to be aligned in parallel (or at least substantially parallel) to and in close proximity with one another. Otherwise, a gap is formed between the head of the retaining device and the vehicle panel body. However, if the structure and panel body are angularly offset from one another, then existing retaining devices may not be suitable to facilitate an effective fixation between the structure and the vehicle panel body.

Further, occasionally, retaining devices may be required to fix two components together, where surfaces are arranged non-parallel with one another. Existing retaining devices, which are only designed to attach two parallelly aligned planar components to one another, are not suitable to facilitate the abutment of components which have non-parallelly aligned surfaces. Thus, more complex fasteners or multiple fasteners may have to be used to securely affix such components. Moreover, such arrangements require a retaining device having a design and dimensions specific for the desired application, i.e. the same retaining device may not be used for another component arranged in a different way, or having different dimensions, for example, in order to compensate for manufacturing and installation tolerances.

Consequently, it would be desirable to provide a retaining device that can alleviate or mitigate one or more of the aforementioned problems. Particularly, it is an object of the invention to provide a retaining device that provides improved functionality and ease of use when attached to a surface structure, and in particular to structures (e.g. doghouses) and surface structures (e.g. vehicle panel body) that are angularly offset from one another. It is a further object of the invention to provide a retaining device that allows for movement, so as to compensate for manufacturing and installation tolerances.

Thus, the present invention provides at least an alternative to retaining devices of the prior art.

### Summary of the Invention

In accordance with the present invention there is provided a retaining device according to the appended claims.

According to an aspect of the present invention, there is provided a retaining device for mounting a structure to a panel body of a vehicle, comprising:
a head member having an upper surface defining an upper plane, a lower surface defining a lower plane, the upper and lower surface being spaced apart by a predetermined thickness;
a shank, having a proximal end portion and a distal end portion, extending away from the lower surface of the head member along a longitudinal axis in a direction that is not normal to the lower plane; and
an engagement member provided at the proximal end portion of the shank at a location spaced apart from the head member towards the distal end portion, adapted to cooperate with the head member, so as to retainingly engage the structure, during use.

By having a shank that has a longitudinal axis extending away from the lower surface of the head member along a longitudinal axis in a direction that is not normal to the lower plane, the retaining device can be inserted into a component to retain the structure between the engagement member and the head member. The vehicle panel into which the retaining device is inserted, and the structure may therefore be arranged angularly offset from one another. That is, the plane of the panel and the structure may be affixed relative to one another such that those planes may be non-parallel. As a result, the arrangement facilitates the installation of structures in more complex assemblies.

Advantageously, the engagement member may be arranged substantially parallel to the lower surface of the head member. This is beneficial as it facilitates the arrangement of the vehicle panel and the structure in an angularly offset manner, while maintaining a uniform spacing between the engagement member and the head member.

Advantageously, the engagement member may comprise at least one first resilient lip portion configured to biasingly engage with an external surface of the structure, during use. By providing at least one first resilient lip portion in this way, the engagement member can compensate for misalignments or tolerance errors. That is, the lip portion may biasingly engage with the structure, filling any gaps between the engagement member and the structure. The provision of the first resilient lip portion also reduces any vibrations between the retaining device and the structure.

Advantageously, the engagement member may comprise at least one second resilient lip portion provided at the shank opposite the at least one first resilient lip portion. This allows the engagement member to be displaced by biasing either of the lip portions, providing further compensation for misalignments or tolerance errors.

Advantageously, the head member may comprise a peripheral ring portion defining a peripheral edge of the head member, having connecting elements arranged radially inward of the peripheral ring portion.

Advantageously, the connecting elements may be resiliently deformable so as to allow lateral movement of the head member relative to the structure between a first position, where the head member is in an equilibrium position free of lateral deformation, and a second position, where the head member is laterally offset relative to the first position. Thus, the head member facilitates the possibility to move the retaining device when it is installed in place. The head member also facilitates the deformation of the retaining device as it is positioned in place. For example, the head member may deform in order to fit into place, and then resiliently deform back to its original undeformed position. The provision of resiliently deformable connecting elements facilitate movement of the head member.

Advantageously, the connecting elements may be torsionally resiliently deformable. This allows the head member to facilitate the movement of the retaining device such that any angular misalignment is compensated for. For example, the connecting members may undergo torsional deformation to align the retaining device, and then resiliently deform (i.e. twist) into its original position. The provision of torsionally resiliently deformable connecting elements facilitates movement, allowing the possibility to rotate the retaining device to a set angular displacement and then return to its original position by elastic reaction of the connecting elements.

Advantageously, the retaining device may further comprise a rib protruding from a surface of the engagement member in a direction that is proximal to and facing the head member, and that is configured to retainingly engage with the structure at a predetermined position of the structure. This is advantageous because the rib ensures that the retaining device is inserted at the correct angular position to engage with the structure. In some embodiments, the correct positioning of the rib is required in order to facilitate engagement of the retaining device and the structure.

Advantageously, the rib may be integrally formed with the engagement member.

Advantageously, the retaining device may further comprise a collar coaxially coupled with the shank. By providing a collar in this way, the collar may provide a surface for engagement with the panel body.

Advantageously, the collar may comprise an outer rim portion protruding in a direction away from the head member towards the distal end portion.

### Brief Description of the Drawings

Certain embodiments are now described hereinafter with reference to the accompanying drawings, in which:
**Figure 1** illustrates a schematic perspective view of a retaining device according to the prior art;
**Figure 2** illustrates a cross-section view along plane II-II of the retaining device shown in Figure 1;
**Figure 3** illustrates a cross-section view along plane III-III of the retaining device shown in Figure 1, but mounted onto a structure having an integrated housing (2) and coupled to a vehicle panel body (3);
**Figure 4** illustrates a schematic perspective view of a retaining device according to an embodiment of the invention;
**Figure 5** illustrates a top view of the retaining device shown in Figure 4;
**Figure 6** illustrates a cross-section view of the retaining device along the plane A-A shown in Figure 5;
**Figure 7** illustrates a perspective side view of the retaining device shown in Figure 4;
**Figure 8** illustrates a cross-section view of the retaining device shown in Figure 4, but mounted on a structure having an integrated housing (102) and coupled to a vehicle panel body (103);
**Figure 9** illustrates a perspective side view of a retaining device as shown in Figure 4, as well as, a structure having a housing for the retaining device integrated in a panel when in a disassembled configuration;
**Figure 10** illustrates a perspective side view of the retaining device as shown in Figure 4, when in an assembled configuration with a panel body element;
**Figure 11** illustrates a close-up perspective side view of the retaining device shown in Figure 10;
**Figure 12** illustrates a perspective side view of the coupled retaining device of Figure 10 and pushing force acting on the device;
**Figure 13** illustrates a perspective front view of the retaining device of Figure 12;
**Figure 14** illustrates a perspective side view of the retaining system of Figure 12, including the affixed panel body element;
**Figure 15** illustrates a perspective front view of the retaining device of Figure 12, including the affixed panel body element;
**Figure 16** illustrates a perspective bottom-side view of the retaining device of Figure 12, as well as, the forces acting on the device when coupled to the structure (i.e. doghouse);
**Figure 17** illustrates a cross-sectional top view of the retaining device of Figure 12 along plane B - B;
**Figure 18** illustrates a perspective front view of a retaining device according to an embodiment of the invention;
**Figure 19** illustrates a side view of the retaining device of Figure 18;
**Figure 20** illustrates an engagement member according to an embodiment of the invention;
**Figure 21** illustrates a bottom view of the retaining device shown in Figure 18;
**Figure 22** illustrates an enlarged view of a portion of the retaining device of Figure 18 showing the connection between the retaining device and the structure having an integrated housing (i.e. doghouse);
**Figure 23** illustrates an enlarged view of a portion of the retaining device of Figure 18 showing the connection between the retaining device and the structure having an integrated housing (i.e. doghouse);
**Figure 24** illustrates a front view of the retaining device of Figure 18, as well as, possible lateral movement of the head member;
**Figure 25** illustrates a side view of the retaining device of Figure 18 when coupled to the structure having an integrated housing for the retaining device;
**Figure 26** illustrates a cross-section view of the retaining device of Figure 24 along plane C - C;
**Figure 27** illustrates a cross-sectional top view of a retaining device of Figure 24 when in a first configuration;
**Figure 28** illustrates a cross-sectional top view of a retaining device of Figure 24 when in a second configuration, including direction of rotation (arrow);
**Figure 29** illustrates a cross-sectional top view of a retaining device of Figure 24 when in a third configuration, including direction of rotation (arrow);
**Figure 30** illustrates a front view of a retaining device according to another embodiment;
**Figure 31** illustrates a side view of the retaining device of Figure 30, and
**Figure 32** illustrates a bottom view of a retaining device according to an embodiment.

### Detailed Description

The described example embodiment relates to a retaining device, and particularly a retaining device for fixing a lining panel to a frame of a vehicle door. The invention is, however, not limited to a retaining device for fixing a lining panel to a frame of a vehicle door. For example, the retaining device may be for fixing any functional component or structure , such as, a doghouse structure having an integrated housing for the retaining device (also known as "doghouse") to a sheet-metal body. i.e. the car panel body.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

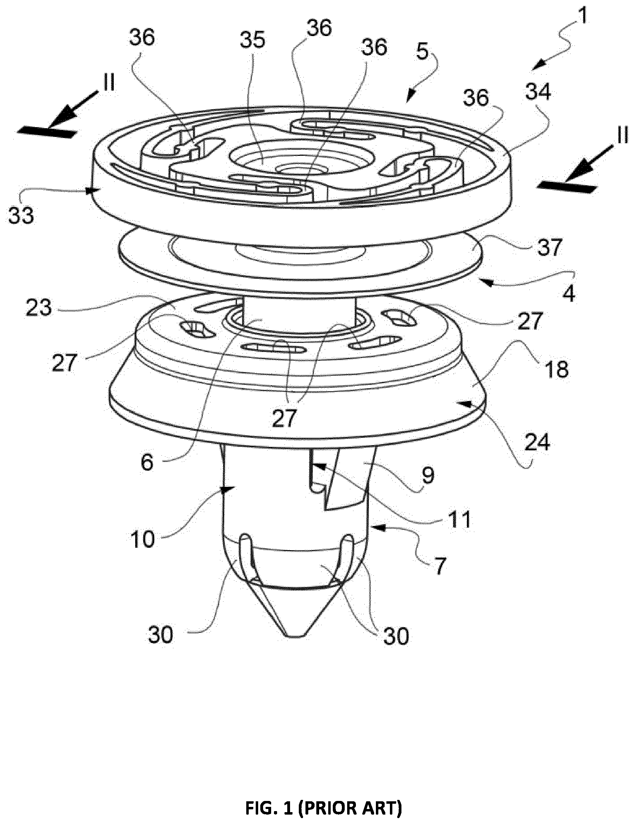

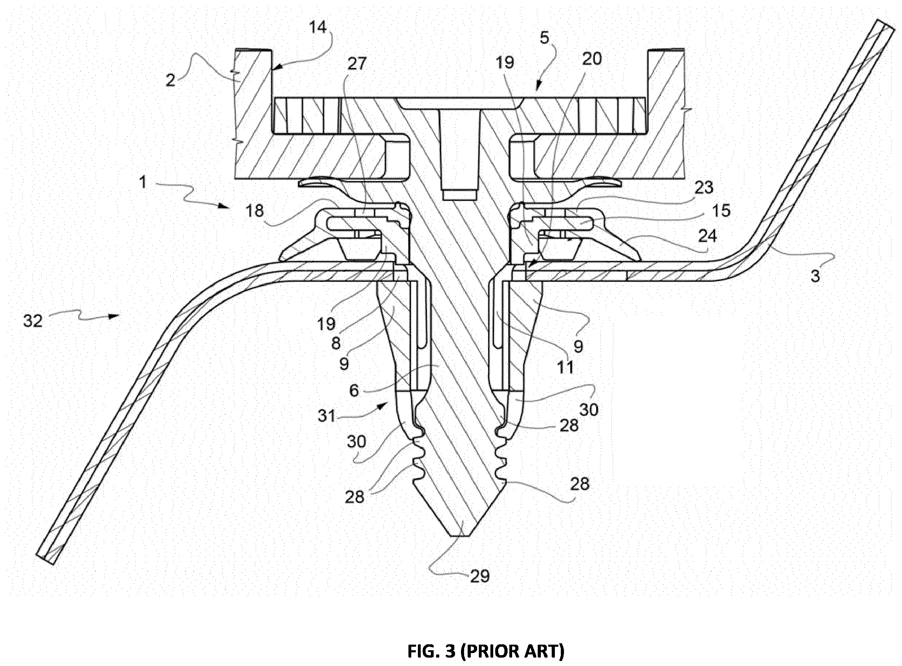

Referring firstly to Figures 1 to 3 there is provided a retaining device 1 according to the prior art. The retaining device 1 is provided with a pin 4, having a head 5 and a shank 6. The shank 6 projects axially from the head 5 towards a bush 7. The bush 7 is provided with elastically deformable teeth 9 that are designed to project radially from a side wall 10 of the bush 7. The teeth 9 are formed as wedge-shaped elements which extend and project inside openings 11 that are formed in the side wall 10. During use, the head 5 of the pin 4 engages with a functional element 2 (see Figure 3), while the shank 6 of the pin 4 is designed with snap engage inside the bush 7.

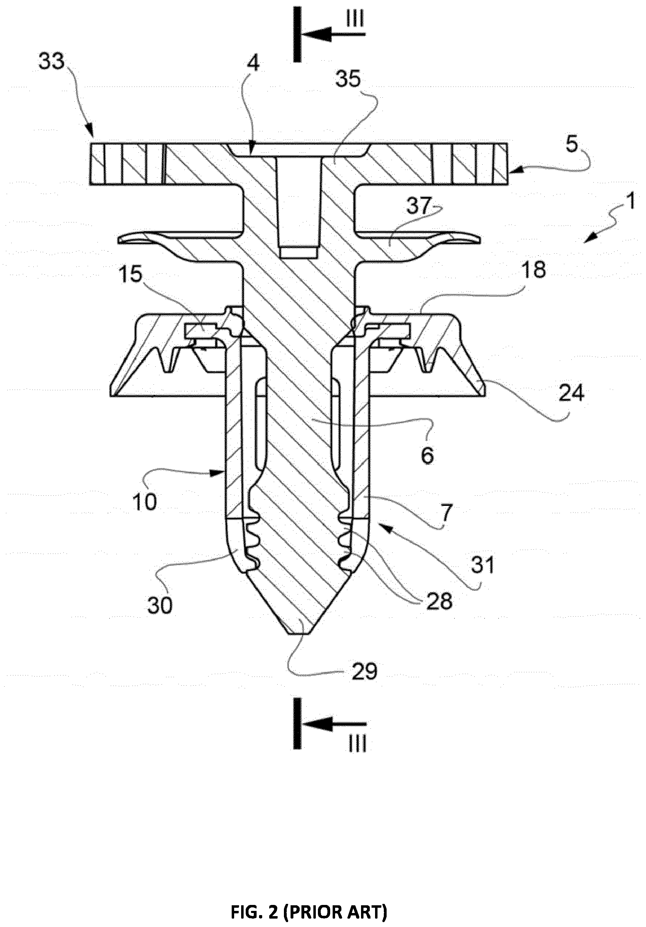

With particular reference to Figure 2 and Figure 3, the bush 7 is provided with a flange 15 formed at an end of the bush 7, directed towards the head 5 of the pin 6. The flange 15 extends radially on the outside of the bush 7, from the side wall 10. The flange 15 is provided integral with an annular element 18, overmoulded onto the flange 15. The flange 15 is embedded inside the annular element 18. The bush 7 is provided with shoulder elements 19 (Figure 3) formed on the flange 15 which are arranged facing the teeth 9. The shoulder elements 19 project radially on the outside from the side wall 10 of the bush 7 and are configured to cooperate during use with a vehicle body element 3 to fix the retaining device 1 to the vehicle body. A functional component 2 can be affixed to the vehicle body using the retaining device 1.

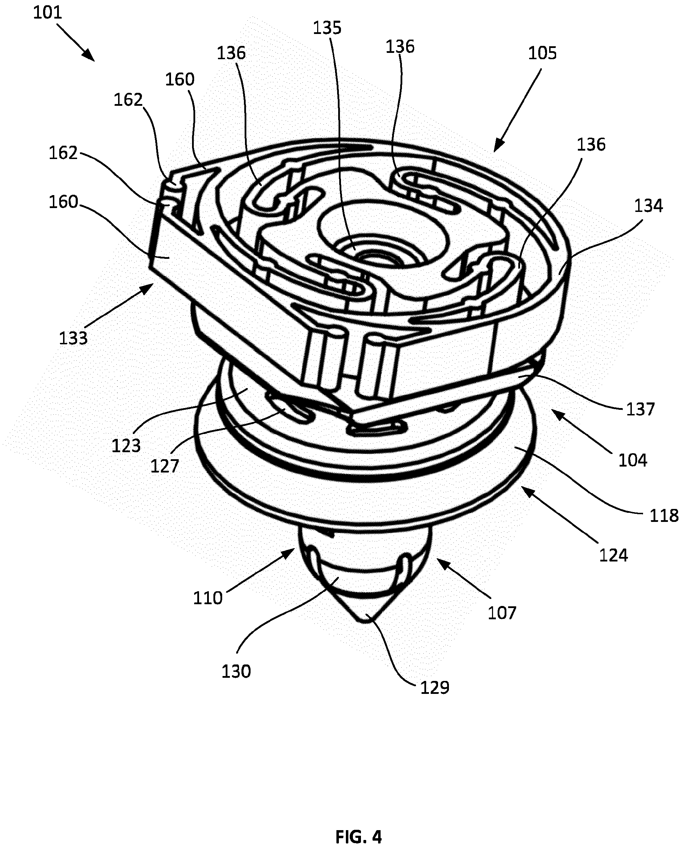

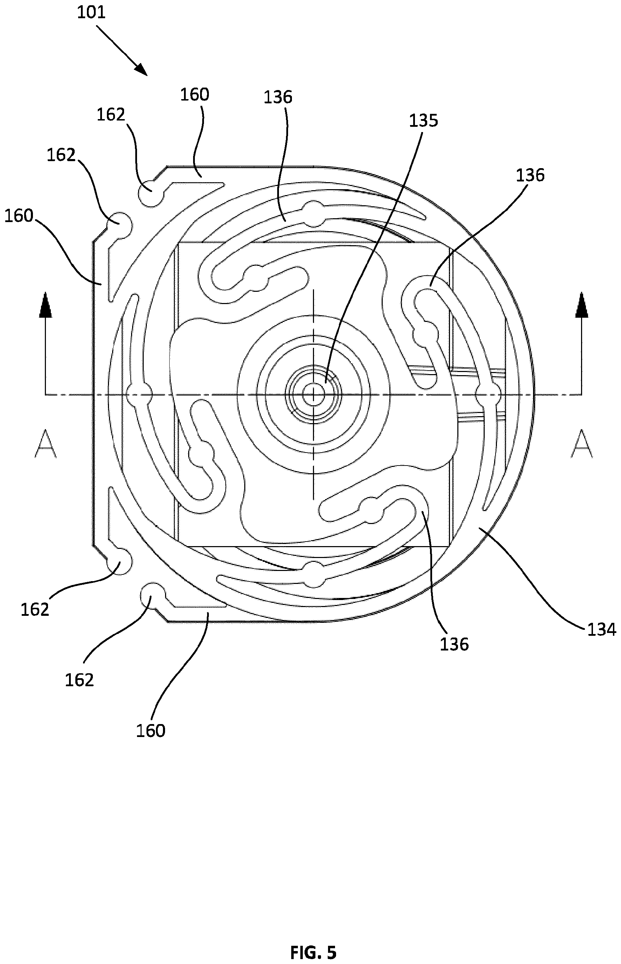

Referring now to Figures 4 to 7, an example embodiment of the retaining device 101 is illustrated. The retaining device 101 has a head member 105 provided with an outer wall portion 134. At the top of the head member 105 there is an upper surface, defining an upper plane. At the bottom of the head member 105 there is a lower surface, defining a lower plane. The head member 105 is better shown with reference to Figure 5. The head member 105 has a central hub 135, connected to a plurality of connecting arms 136 extending radially and connecting towards the outer wall portion 134. The connecting arms 136 are thin so as to deform and displace the head member 105 in the lateral direction. The head member 105 is annular in shape, additionally having extension arms 160 protruding from the annular part of the head member 105. In this particular example, one edge of the head member 105 has a linear profile. The edge with a linear profile has an extension arm 160 that is discontinuous from extension arms 160 on adjacent sides of the head member 105, separated and spaced apart by extension arm ends 162.

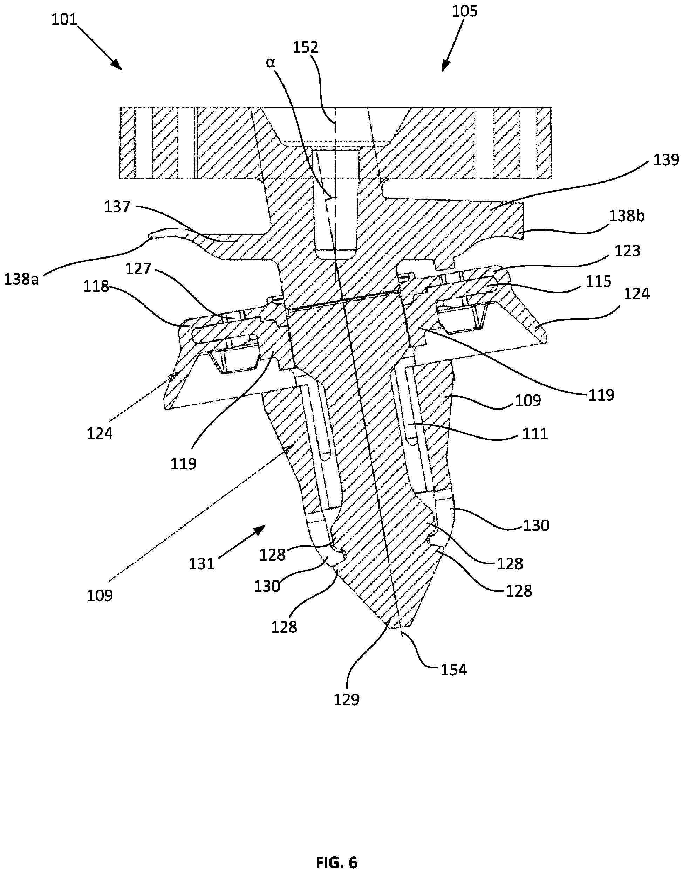

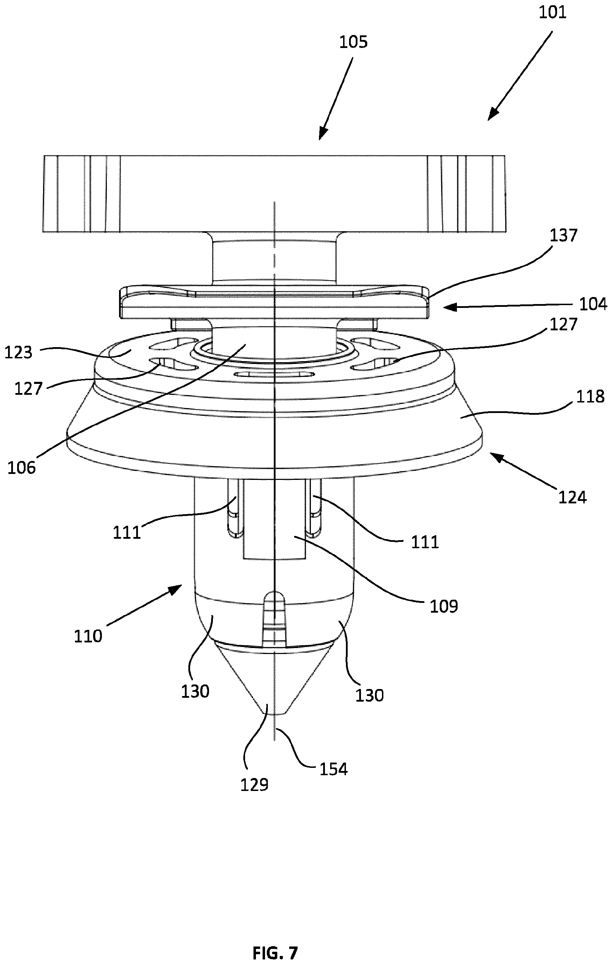

Referring to Figures 6 and 7, the retaining device 101 has a shank 106 (Figure 7) that extends away from the lower surface of the head member 105. The shank 106 has a longitudinal axis 154. The head member 105 has a central hub axis 152. The longitudinal axis 154 and the central hub axis 152 form an angle α between them. The shank 106 extends away from the lower surface of the head member 105 in a direction that is not normal to the lower plane defined by the lower surface of the head member 105. In this example embodiment, the shank 106 extends away from the head member 105, forming an angle α of 15 degrees. Other angular offsets are envisaged, such as 10 degrees, 20 degrees or 25 degrees, for example. The retaining device 101 has an engagement member 137 that is attached to the shank 106, displaced from the head member 105. In some example embodiments, a gap is formed between the engagement member 137 and the head member 105. The engagement member 137 has a first side provided with first lip portion 138a, and an opposing second side provided with a second lip portion 138b. The first lip portion 138a and the second lip portion 138b are made of a flexible material such that they are deformable. In this example embodiment, the upper surface of the engagement member 137 is provided with a rib 139 proximal the second side, that protrudes away from the engagement member 137 in a direction towards the head member 105. The engagement member 137 is arranged substantially parallel to the head member 105.

The shank 106 of the retaining device 101 is configured to snap-engage with the bush 107 (Figure 4) in a known manner. The bush 107 is provided with teeth 109 that project through an opening 111. The retaining device 101 is provided with a flange portion 115, embedded inside a collar 118. The collar 118 protrudes away from the head member 105 outwards to form a rim portion 124. The collar 118 is coupled to the shank 106 and has a central axis coaxial with the longitudinal axis 154 of the shank 106. In this particular example, a plurality of radial teeth 128 are provided towards the free end 129.

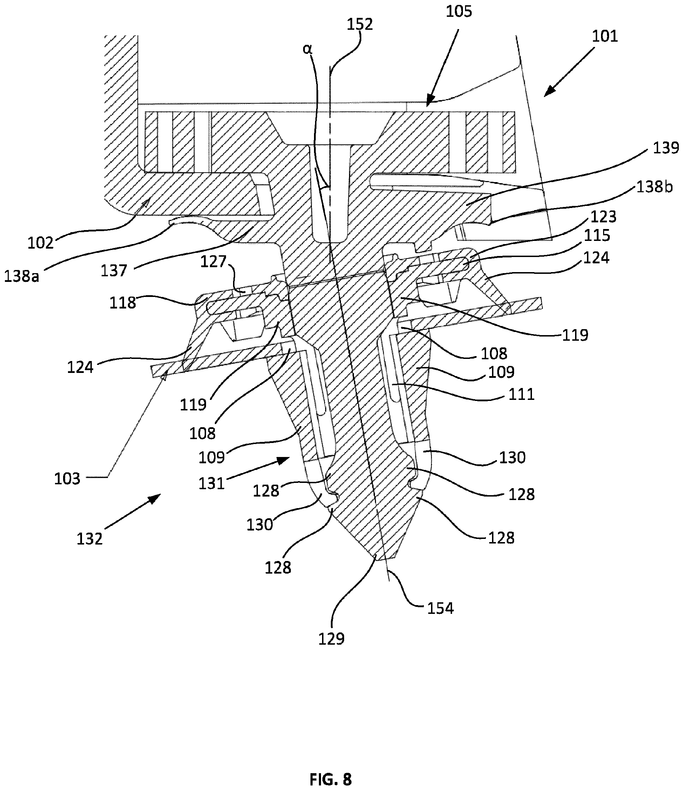

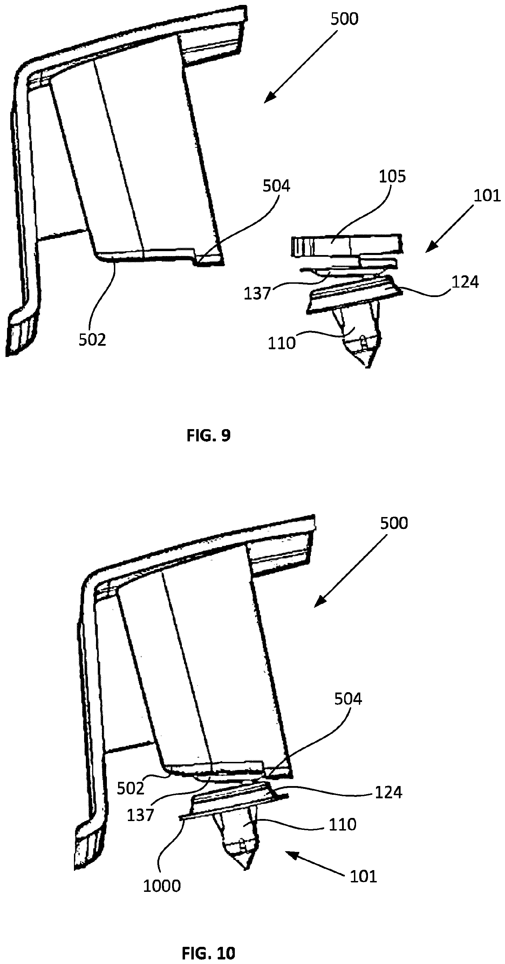

Figures 8 to 15 show the retaining device 101 in use. The retaining device 101 is mounted to a structure 102. The structure 102 in this example embodiment is a doghouse component. The thickness of the structure 102 is received between the head member 105 and the engagement member 137. More specifically, the structure 102 is received between the bottom surface of the head member 105 and the upper surface of the engagement member 137. The retaining device 101 holds the structure 102 in place. During installation, when the retaining device 101 engages with the structure 102, the first lip portion 138a of the engagement member 137 resiliently biases against the structure 102, allowing the structure 102 to urge against the first lip portion 138a downwards to fit the structure 102 between the engagement member 137 and the head member 105. The first lip portion 138a of the engagement member 137 resiliently biases against the structure 102 to hold the structure 102 in place. Figure 9 illustrates the retaining device 101 before it is installed into the doghouse structure 500 and Figure 10 illustrates the retaining device 101 after it is installed into the doghouse structure 500. The retaining device 101 engages with a locating surface 502 of the doghouse 500. Once the retaining device 101 is affixed in position, the second lip portion 138b engages with and biases against a stop 504 of the doghouse structure 500.

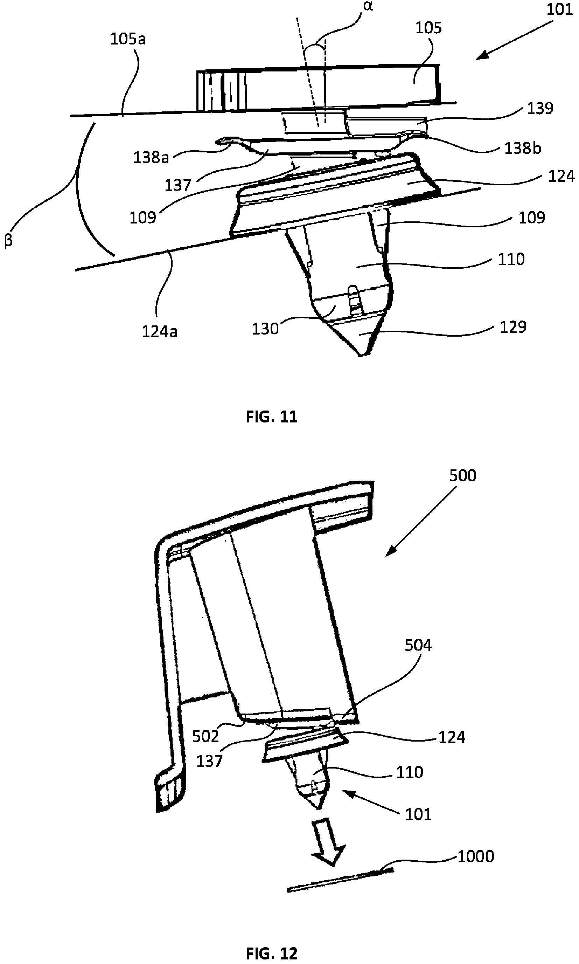

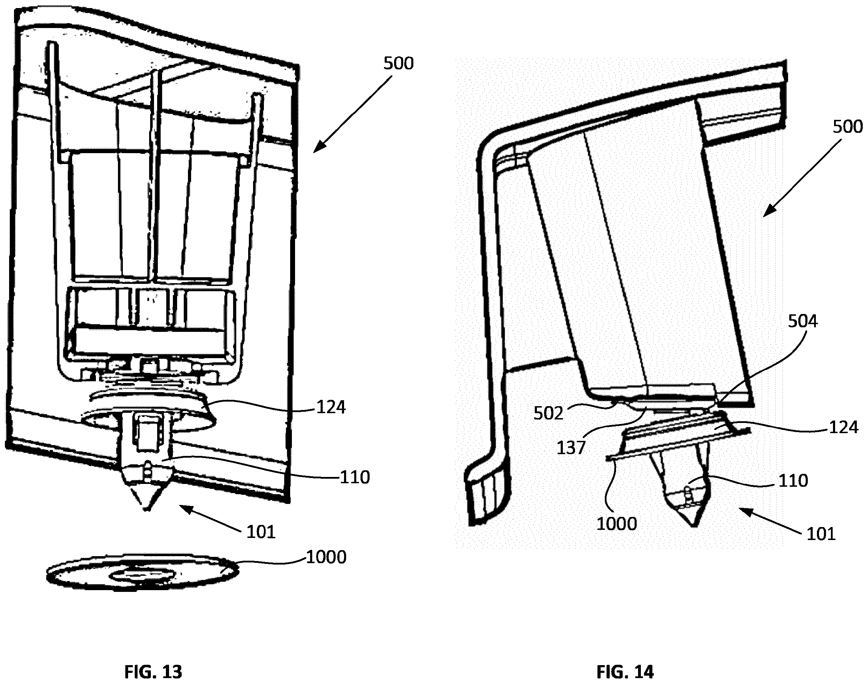

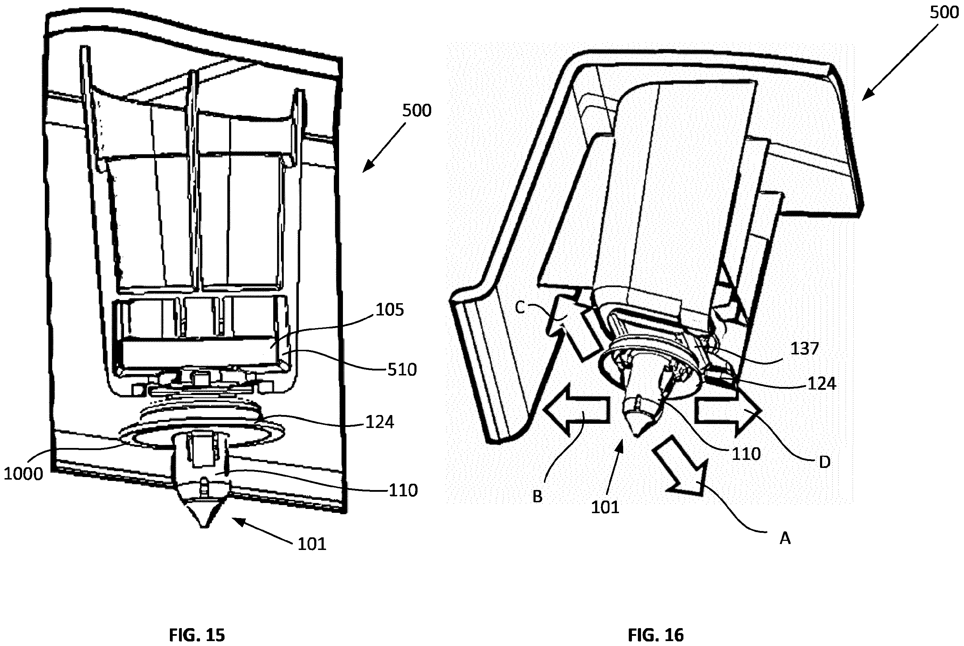

As shown in Figure 11, the angle formed by the central axis 152 (see Figure 8) of the hub 135 and the longitudinal axis 154 of the shank 106 is denoted α. The angle formed by the longitudinal axis 154 of the shank 106 and the plane defined by the rim portion 124 of the collar 118 is denoted β. In this example embodiment, the angle α formed between the central axis 152 and the longitudinal axis 154 is 20 degrees and the angle β formed between the longitudinal axis 154 and the plane defined by the rim portion 124 of the collar 118 is 70 degrees. However, other angles are envisaged. The difference in angles between the head member 105 and the rim portion 124 allows a structure 102 to be retained between the head member 105 and the engagement member 137, while the collar portion 118 may engage with a vehicle panel structure 1000. Figures 12 and 13 shows the retaining device 101 mounted to a portion of a vehicle panel 1000. For illustration purposes, the entirety of the vehicle panel 1000 is not shown. Figures 14 and 15 show the vehicle panel 1000 attached to collar 118 of the retaining device 101. Once installed, the doghouse structure 500 is mounted to the retaining device 101 and the vehicle panel 1000 is mounted to the retaining device 101 distal the doghouse structure 500. The doghouse structure 500 and the vehicle panel 1000 are held in position by the retaining device 101 in an orientation such that they are angularly offset from one another.

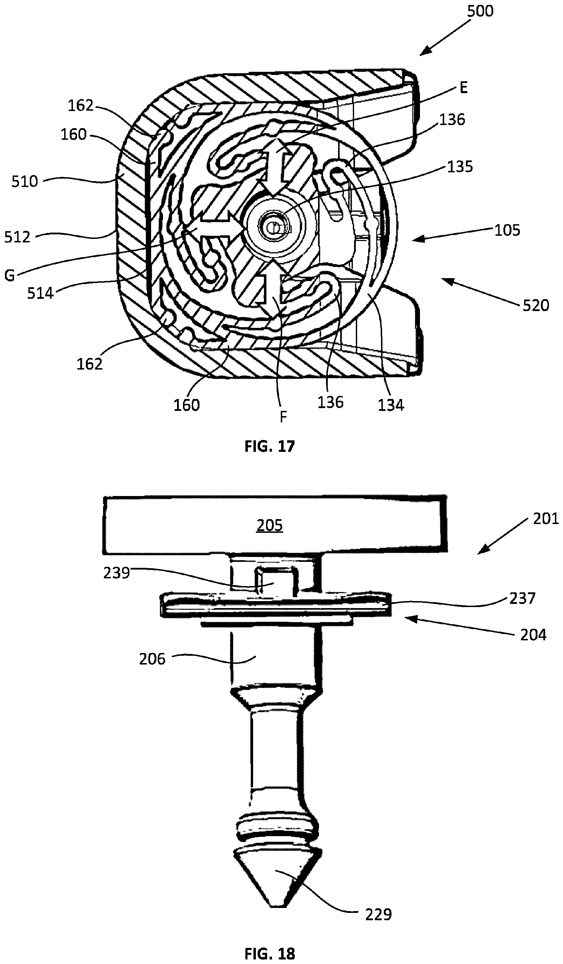

Figure 16 shows the retaining device 101 housed inside the doghouse 500, such that the engagement member 137 is seated on a bottom surface of the doghouse 500. The first lip portion 138a of the engagement member 137 biases against the locating surface 502 of the doghouse 500 such that the retaining device 101 may move in the biasing direction of the first lip portion 138a. That is, the deformation of the first lip portion 138a may move the retaining device 101 in the direction denoted by the arrows B and D. The second lip portion 138b of the engagement member 137 biases against the stop 504 of the doghouse 500 such that the retaining device 101 may move in the biasing direction of the second lip portion 138b. That is, the deformation of the second lip portion 138b may also move the retaining device 101 in the direction denoted by the arrows B and D. The retaining device 101 in this example embodiment may also move in the directions denoted by the arrows A and C, by the deformation of connecting arms 136 (see Figure 17).

Figure 17 illustrates a portion 510 of the doghouse 500 having the retaining device 101 seated inside. The extension arms 160 formed on the outer wall portion 134 of the head member 105 form linear edges that are configured to engage with linear surfaces 514 of the doghouse 500. The linear surface 514 is an inner surface of the doghouse 500 that engages with the head member 105, to affix the retaining device 101 to the doghouse 500. The doghouse 500 has an outer wall surface 512. The connecting arms 136 may deform in the lateral direction along any of the directions denoted by the arrows E, F and G. The deformation of the connecting arms 136 may compensate for errors of alignment or position in this way, moving the retaining device 101 in any of the arrows denoted A, B, C or D in Figure 16. The retaining device 101 may also be moved in the axial direction to recover positional tolerances. In some examples, the retaining device 101 may deform to an offset position to be inserted into the doghouse 500, and then bias towards the original position. For example, the retaining device 101 may move in any of the directions denoted A, B, C or D, and then spring back to its original undeformed position. In one example embodiment, the deformation of the first lip portion 138a or the second lip portion 138b deforms the engagement member 137 to alter the angular offset between the head member 105 and the shank 106.

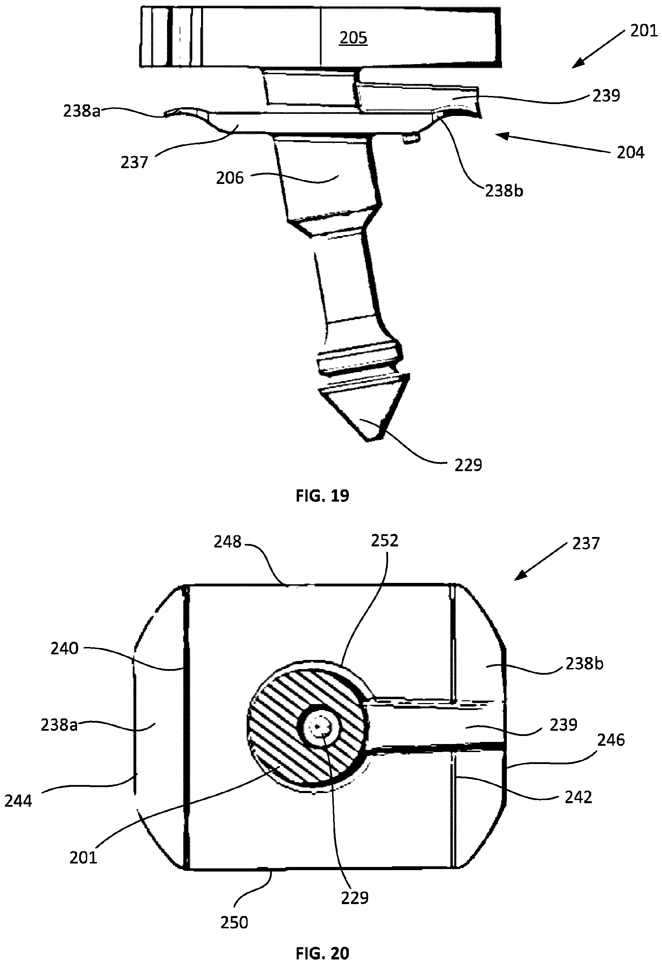

Referring now to Figures 18 and 19, there is provided a retaining device 201. The retaining device 201 is substantially the same as retaining device 101 as previous described. However, the collar and the bush are removed. The retaining device 201 has a head member 205 and a shank 206 extending from a lower surface of the head member 205. The shank 206 has a longitudinal axis extending away in a direction not normal to the lower surface of the head member 205. The retaining device 201 also has an engagement member 237 as hereinbefore described with reference to Figures 4 to 17.

The engagement member 237 is shown in more detail in Figure 20. The engagement member 237 has a first lip portion 238a on a first side 244 and a second lip portion 238b on an opposing second side 246. Connecting the first side 244 and the second side 246 are side edges 248, 250 arranged opposing one another. The side edges 248,250 have linear profiles. The first lip portion 238a is deformable about a first fold 240. The second lip portion 238b is deformable about a second fold 242. The engagement member 237 has an aperture 252 positioned centrally, extending through the engagement member 237, in which the shank 206 (i.e. the retaining device 201) is held. The engagement member 237 has a rib 239 extending between the aperture 252 and the second side 246. The rib 239 forms a raised surface extending away from the surface of the engagement member 237.

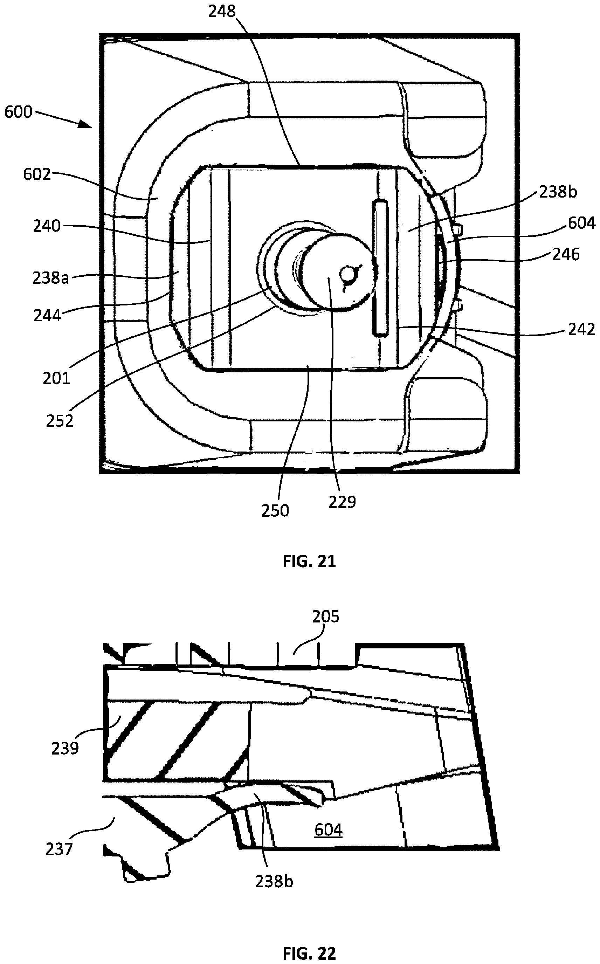

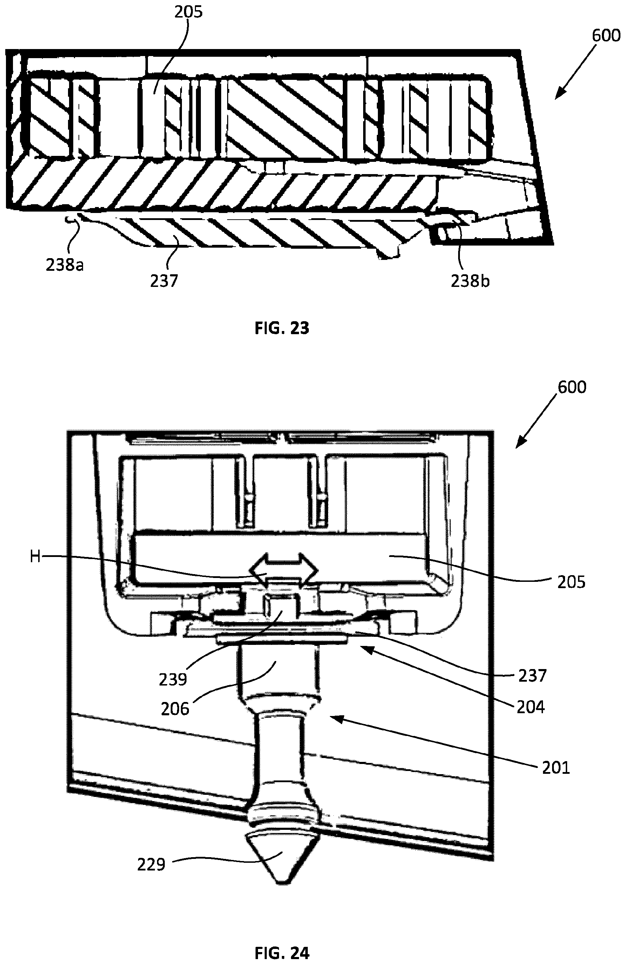

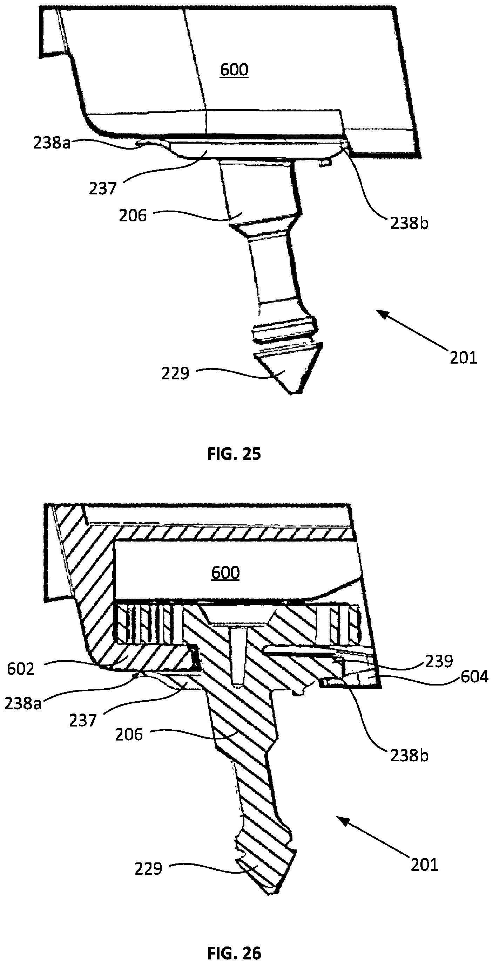

Figures 21 to 26 illustrate the retaining device 201 assembled with the doghouse 600. When the retaining device 201 is assembled in place, the engagement member 237 is held in place on the doghouse 600. The second lip portion 238b of the engagement member 237 urges against the stop 604. The second lip portion 238b in this example embodiment is deformable so as to compensate for vibrations and misalignments of the retaining device 201 in the doghouse 600. The positioning of the engagement member 237 and the head member 205 of the retaining device 201 and the doghouse 600 is more clearly shown with reference to Figures 22 and 23. In some example embodiments, the gap formed between the head member 205 and the engagement member 237 holds the doghouse 600 in place such that the stop 604 of the doghouse 600 engages with the second lip portion 238b of the engagement member 237. As shown in Figure 22, the rib 239 of the engagement member 237 is held against the doghouse 600. Referring particularly to Figure 24 and 25, the rib 239 is arranged in line with the inclined direction of the shank 206 relative to the head member 205. The rib 239 of the engagement member 237 engages with doghouse 600 at the predetermined orientation of the retaining device 201, ensuring the correct application of the retaining device 201 during its application. The rib 239 in this example embodiment is thin relative to the width of the engagement member 237 such that the rib 239 is movable in the lateral direction denoted by the arrow H.

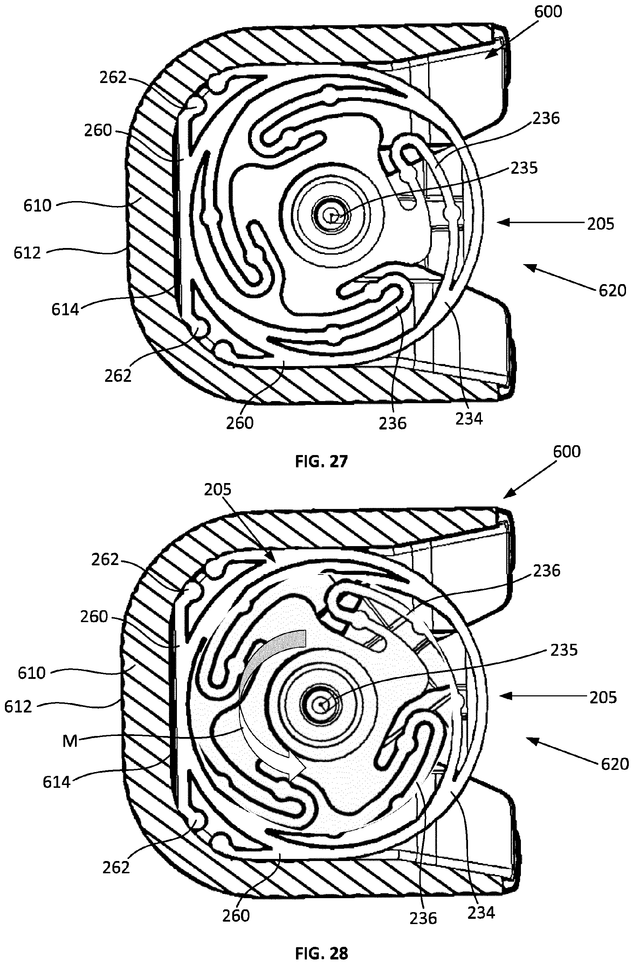

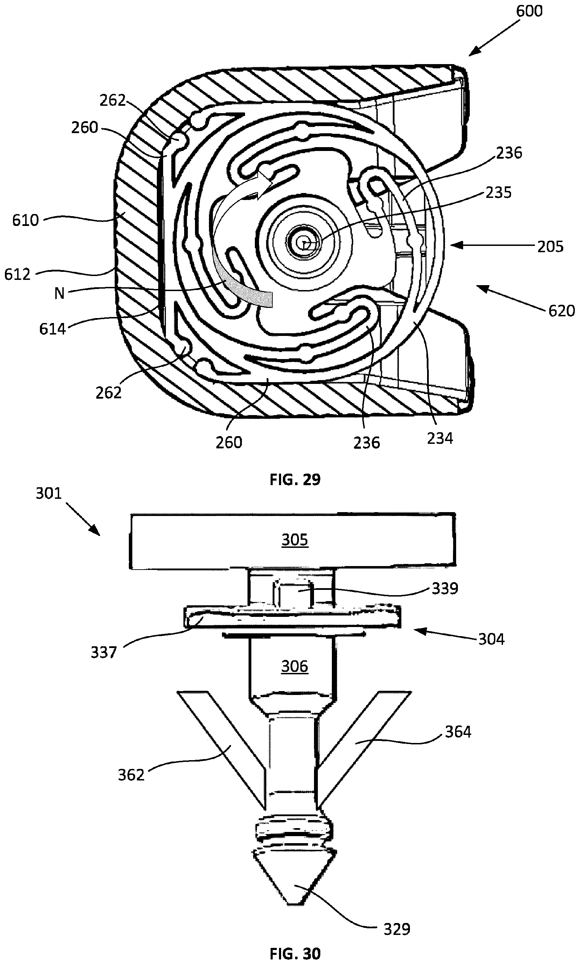

Figure 27 illustrates a portion 610 of the doghouse 600 having the retaining device 201 seated inside, substantially the same as in Figure 17. In this example embodiment, the connecting arms 236 are deformable in the radial direction. The deformation of the connecting arms 236 may compensate for errors in the angular position of the retaining device 201. The retaining device 201 may deform to an angularly offset (i.e. torsionally offset) position, as denoted by the arrow M shown in Figure 28. The retaining device 201 may then be inserted into the doghouse 600, and then torsionally resiliently biased back towards the original position, as denoted by the arrow N shown in Figure 29.

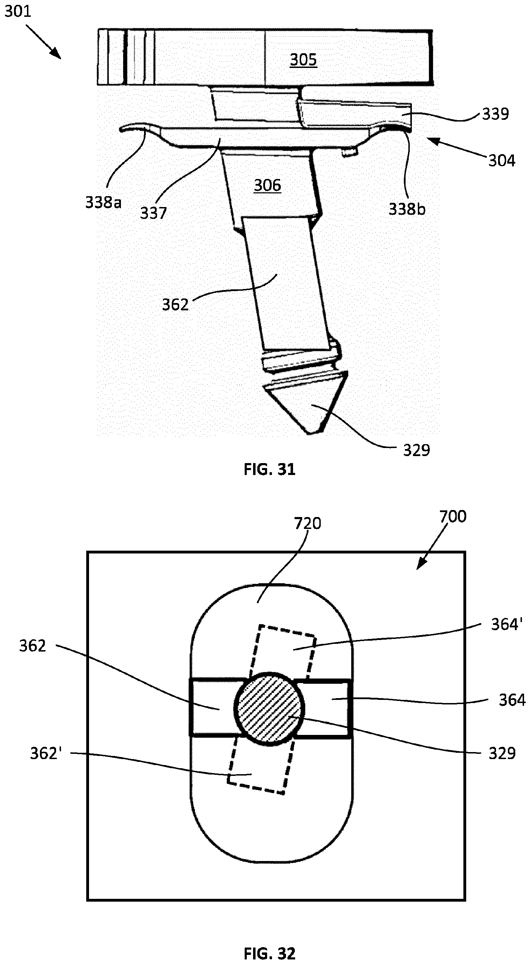

Figures 30 and 31 illustrate a retaining device 301 according to a further embodiment. The retaining device 301 is substantially the same as retaining device 201 previously described, further provided with a first wing element 362 extending from a first side of the shank 306, and a second wing element 364 extending from an opposing second side of the shank 306. In this example embodiment, each of the first wing element 362 and the second wing element 364 are integrally connected with the shank 306 and are hingedly connected to the shank 306. The first wing element 362 and the second wing element 364 are individually displaceable from a position flush with the shank 306, to a position extending outward from the shank 306, away from the longitudinal axis of the shank 306. The first wing element 362 and the second wing element 364 protrude outwards so as to engage with the edges of an aperture 720 of a vehicle panel 700. When the retaining device 301 is aligned in the correct position for application, the wing elements 362, 364 engage with the aperture 720 edges. When the wing elements 362, 364 in an incorrect position, they do not engage with the aperture 720 edges, the position of which is illustrated by the dashed lines showing the position of the wing elements, denoted 362', 364'.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A retaining device (101,201,301) for mounting a structure (500) to a panel body (1000) of a vehicle, comprising:
a head member (105,205) having an upper surface defining an upper plane, a lower surface defining a lower plane, said upper and lower surface being spaced apart by a predetermined thickness;
a shank (106,206,306), having a proximal end portion and a distal end portion; and
an engagement member (137,237) provided at said proximal end portion of said shank (106,206,306) at a location spaced apart from said head member (105,205) towards said distal end portion, adapted to cooperate with said head member (105,205) so as to retainingly engage the structure (500), during use,
**characterised in that** said shank (106,206,306) extends away from said lower surface of said head member (105,205) along a longitudinal axis in a direction that is not normal to said lower plane.

2. A retaining device (101,201,301) according to claim 1, wherein said engagement member (137,237) is arranged substantially parallel to said lower surface of said head member (105,205).

3. A retaining device (101,201,301) according to claim 1 or claim 2, wherein said engagement member (137,237) comprises at least one first resilient lip portion (138a,238a) configured to biasingly engage with an external surface of the structure (500), during use.

4. A retaining device (101,201,301) according to claim 3, wherein said engagement member (137,237) comprises at least one second resilient lip portion (138b,238b) provided at said shank (106,206,306) opposite said at least one first resilient lip portion (138a,238a).

5. A retaining device (101,201,301) according to any one of the preceding claims, wherein said head member (105,205) comprises a peripheral ring portion (134) defining a peripheral edge of said head member (105,205), having connecting elements (136,236) arranged radially inward of said peripheral ring portion (134).

6. A retaining device (101,201,301) according to claim 5, wherein said connecting elements (136,236) are resiliently deformable so as to allow lateral movement of said head member (105,205) relative to the structure (500) between a first position, where said head member (105,205) is in an equilibrium position free of lateral deformation, and a second position, where said head member (105,205) is laterally offset relative to said first position.

7. A retaining device (101,201,301) according to claim 5 or claim 6, wherein said connecting elements (136,236) are torsionally resiliently deformable .

8. A retaining device (101,201,301) according to any one of the preceding claims, further comprising a rib (139,239) protruding from a surface of said engagement member (137,237) in a direction that is proximal to and facing said head member (105,205) and that is configured to retainingly engage with the structure (500) at a predetermined position of the structure (500).

9. A retaining device (101,201,301) according to claim 8, wherein said rib (139,239) is integrally formed with said engagement member (137,237).

10. A retaining device (101) according to any one of the preceding claims, further comprising a collar (118) coaxially coupled with said shank (106,206,306).

11. A retaining device (101,201,301) according to claim 10, wherein said collar (118) comprises an outer rim portion (124) protruding in a direction away from said head member (105,205) towards said distal end portion.

## Patentansprüche

1. Haltevorrichtung (101, 201, 301) zum Anbringen einer Struktur (500) an einem Verkleidungskörper (1000) eines Fahrzeugs, aufweisend:
ein Kopfelement (105, 205), das eine obere Fläche, die eine obere Ebene definiert, und eine untere Fläche, die eine untere Ebene definiert, aufweist, wobei die obere und untere Fläche durch eine vorbestimmte Dicke voneinander beabstandet sind;
einen Schaft (106, 206, 306), der einen proximalen Endabschnitt und einen distalen Endabschnitt aufweist; und
ein Eingriffselement (137, 237), das an dem proximalen Endabschnitt des Schafts (106, 206, 306) an einer Stelle vorgesehen ist, die von dem Kopfelement (105, 205) in Richtung des distalen Endabschnitts beabstandet und dazu ausgelegt ist, mit dem Kopfelement (105, 205) so zusammenzuwirken, dass es während des Gebrauchs haltend mit der Struktur (500) in Eingriff steht,
**dadurch gekennzeichnet, dass** sich der Schaft (106, 206, 306) von der unteren Fläche des Kopfelements (105, 205) entlang einer Längsachse in eine Richtung erstreckt, die nicht senkrecht zu der unteren Ebene liegt.

2. Haltevorrichtung (101, 201, 301) nach Anspruch 1, wobei das Eingriffselement (137, 237) im Wesentlichen parallel zu der unteren Fläche des Kopfelements (105, 205) angeordnet ist.

3. Haltevorrichtung (101, 201, 301) nach Anspruch 1 oder Anspruch 2, wobei das Eingriffselement (137, 237) zumindest einen ersten elastischen Lippenabschnitt (138a, 238a) aufweist, der so konfiguriert ist, dass er während des Gebrauchs mit einer Außenfläche der Struktur (500) vorgespannt in Eingriff steht.

4. Haltevorrichtung (101, 201, 301) nach Anspruch 3, wobei das Eingriffselement (137, 237) zumindest einen zweiten elastischen Lippenabschnitt (138b, 238b) aufweist, der an dem Schaft (106, 206, 306) gegenüber dem zumindest einen ersten elastischen Lippenabschnitt (138a, 238a) vorgesehen ist.

5. Haltevorrichtung (101, 201, 301) nach einem der vorhergehenden Ansprüche, wobei das Kopfelement (105, 205) einen Umfangsringabschnitt (134) aufweist, der eine Umfangskante des Kopfelements (105, 205) definiert und der Verbindungselemente (136, 236) aufweist, die radial innerhalb des Umfangsringabschnitts (134) angeordnet sind.

6. Haltevorrichtung (101, 201, 301) nach Anspruch 5, wobei die Verbindungselemente (136, 236) elastisch verformbar sind, um eine seitliche Bewegung des Kopfelements (105, 205) relativ zu der Struktur (500) zwischen einer ersten Position, in der sich das Kopfelement (105, 205) in einer Gleichgewichtsposition befindet, in der keine seitliche Verformung auftritt, und einer zweiten Position, in der das Kopfelement (105, 205) relativ zu der ersten Position seitlich versetzt ist, zu ermöglichen.

7. Haltevorrichtung (101, 201, 301) nach Anspruch 5 oder Anspruch 6, wobei die Verbindungselemente (136, 236) drehelastisch verformbar sind.

8. Haltevorrichtung (101, 201, 301) nach einem der vorhergehenden Ansprüche, die eine Rippe (139, 239) aufweisend, die von einer Fläche des Eingriffselements (137, 237) in einer Richtung vorsteht, die proximal zu dem Kopfelement (105, 205) und diesem zugewandt ist, und die so konfiguriert ist, dass sie an einer vorbestimmten Position der Struktur (500) haltend mit der Struktur (500) in Eingriff steht.

9. Haltevorrichtung (101, 201, 301) nach Anspruch 8, wobei die Rippe (139, 239) integral mit dem Eingriffselement (137, 237) ausgebildet ist.

10. Haltevorrichtung (101) nach einem der vorhergehenden Ansprüche, ferner einen Kragen (118) aufweisend, der koaxial mit dem Schaft (106, 206, 306) gekoppelt ist.

11. Haltevorrichtung (101, 201, 301) nach Anspruch 10, wobei der Kragen (118) einen äußeren Randabschnitt (124) aufweist, der in einer Richtung weg von dem Kopfelement (105, 205) in Richtung des distalen Endabschnitts vorsteht.

## Revendications

1. Dispositif de retenue (101, 201, 301) pour le montage d'une structure (500) sur un corps de panneau (1000) d'un véhicule, comprenant :
un élément de tête (105, 205) ayant une surface supérieure définissant un plan supérieur, une surface inférieure définissant un plan inférieur, lesdites surfaces supérieure et inférieure étant espacées par une épaisseur prédéterminée ;
une tige (106, 206, 306), ayant une partie d'extrémité proximale et une partie d'extrémité distale ; et
un élément d'engagement (137, 237) fourni sur ladite partie d'extrémité proximale de ladite tige (106, 206, 306) à un emplacement espacé dudit élément de tête (105, 205) vers ladite partie d'extrémité distale, adapté pour coopérer avec ledit élément de tête (105, 205) de manière à engager de manière retenue la structure (500), durant l'utilisation, **caractérisé en ce que** ladite tige (106, 206, 306) s'éloigne de ladite surface inférieure dudit élément de tête (105, 205) le long d'un axe longitudinal dans une direction qui n'est pas normale audit plan inférieur.

2. Dispositif de retenue (101, 201, 301) selon la revendication 1, dans lequel ledit élément d'engagement (137, 237) est agencé sensiblement parallèlement à ladite surface inférieure dudit élément de tête (105, 205).

3. Dispositif de retenue (101, 201, 301) selon la revendication 1 ou la revendication 2, dans lequel ledit élément d'engagement (137, 237) comprend au moins une première partie de lèvre élastique (138a, 238a) configurée pour s'engager de manière sollicitée avec une surface externe de la structure (500), durant l'utilisation.

4. Dispositif de retenue (101, 201, 301) selon la revendication 3, dans lequel ledit élément d'engagement (137, 237) comprend au moins une deuxième partie de lèvre élastique (138b, 238b) fournie sur ladite tige (106, 206, 306) opposée à ladite au moins une première partie de lèvre élastique (138a, 238a).

5. Dispositif de retenue (101, 201, 301) selon l'une quelconque des revendications précédentes, dans lequel ledit élément de tête (105, 205) comprend une partie annulaire périphérique (134) définissant un bord périphérique dudit élément de tête (105, 205), ayant des éléments de connexion (136, 236) agencés radialement vers l'intérieur de ladite partie annulaire périphérique (134).

6. Dispositif de retenue (101, 201, 301) selon la revendication 5, dans lequel lesdits éléments de connexion (136, 236) sont déformables de manière élastique de manière à permettre un mouvement latéral dudit élément de tête (105, 205) par rapport à la structure (500) entre une première position, où ledit élément de tête (105, 205) est dans une position d'équilibre sans déformation latérale, et une deuxième position, où ledit élément de tête (105, 205) est décalé latéralement par rapport à ladite première position.

7. Dispositif de retenue (101, 201, 301) selon la revendication 5 ou la revendication 6, dans lequel lesdits éléments de connexion (136, 236) sont déformables élastiquement en torsion.

8. Dispositif de retenue (101, 201, 301) selon l'une quelconque des revendications précédentes, comprenant en outre une nervure (139, 239) faisant saillie à partir d'une surface dudit élément d'engagement (137, 237) dans une direction qui est proximale et fait face audit élément de tête (105, 205) et qui est configurée pour s'engager de manière retenue avec la structure (500) à une position prédéterminée de la structure (500).

9. Dispositif de retenue (101, 201, 301) selon la revendication 8, dans lequel ladite nervure (139, 239) est formée d'un seul tenant avec ledit élément d'engagement (137, 237).

10. Dispositif de retenue (101) selon l'une quelconque des revendications précédentes, comprenant en outre un collier (118) couplé coaxialement à ladite tige (106, 206, 306).

11. Dispositif de retenue (101, 201, 301) selon la revendication 10, dans lequel ledit collier (118) comprend une partie de rebord externe (124) faisant saillie dans une direction s'éloignant dudit élément de tête (105, 205) vers ladite partie d'extrémité distale.
